# EUROPÄISCHE PATENTSCHRIFT

(11) **EP 3 186 740 B1**
(45) Veröffentlichungstag und Bekanntmachung des Hinweises auf die Patenterteilung: **17.06.2020**
(21) Anmeldenummer: 15762511.2
(22) Anmeldetag: 26.08.2015
(51) Int. Cl.: G06F 21/10, G06F 9/445, G06F 8/654

(54) **VERFAHREN ZUR INSTALLATION EINER ZUSÄTZLICHEN APPLIKATION IN EINEM NICHT-FLÜCHTIGEN SPEICHER EINER CHIPKARTE**
METHOD FOR INSTALLING AN ADDITIONAL APPLICATION IN A NON-VOLATILE MEMORY OF A CHIP CARD
PROCÉDÉ D'INSTALLATION D'UNE APPLICATION SUPPLÉMENTAIRE DANS UNE MÉMOIRE NON VOLATILE D'UNE CARTE À PUCE

(30) Priorität: 27.08.2014 DE 102014112304
(43) Veröffentlichungstag der Anmeldung: 05.07.2017
(73) Patentinhaber: Bundesdruckerei GmbH, 10969 Berlin (DE); CV Cryptovision GmbH, 45886 Gelsenkirchen (DE)
(72) Erfinder: MÜLLER, Frank, 10407 Berlin (DE); SCHOLZE, Steffen, 13469 Berlin (DE); SCHWAN, Matthias, 10437 Berlin (DE); HESSE, Danny, 10785 Berlin (DE); FILZHUTH, Elke, 12359 Berlin (DE); WIRTH, Klaus-Dieter, 12683 Berlin (DE); MAI, Thomas, 46236 Bottrop (DE); LOHOFF, Ansgar, 45879 Gelsenkirchen (DE)
(74) Vertreter: Richardt Patentanwälte PartG mbB
(86) Internationale Anmeldenummer: PCT/EP2015/069498
(87) Internationale Veröffentlichungsnummer: WO 2016/030404

(56) Entgegenhaltungen:
- EP-A1- 1 132 796
- EP-A1- 1 768 021
- EP-A2- 0 813 133
- EP-A2- 1 130 495
- US-A1- 2005 222 918

## Beschreibung

Die Erfindung betrifft ein Verfahren zur Installation von Applikationen auf Chipkarten sowie eine zur Durchführung eines derartigen Verfahrens eingerichtete Chipkarte.

Aus dem Stand der Technik sind Verfahren zur Installation von Applikationen bekannt. Insbesondere offenbart die Druckschrift DE 10 2009 041 924 A1 ein Verfahren zum Installieren und Konfigurieren von Applikationen in einem portablen Datenträger, der auch als Chipkarte realisiert sein kann. Dieses bekannte Verfahren ermöglicht die Installation von einer oder mehreren Applikationen mit lediglich einem Aufruf des Installationskommandos. Außerdem sieht das bekannte Verfahren vor, den Applikationen unterschiedliche Privilegien zuzuweisen, um eine Sicherheitsinfrastruktur bereit zu stellen.

Das bekannte Verfahren ist für die paketweise Installation von Applikationen im Rahmen einer Massenverarbeitung ausgelegt und zielt konsequent auf die Verkürzung der für die Installation benötigten Zeit durch eine Reduktion des Umfangs der Installationsdaten. Das bekannte Verfahren kann jedoch nicht immer die Sicherheit bieten, die nach derzeitigem Erfahrungsstand für eine Installation von einzelnen Applikationen durch einen privaten Nutzer erforderlich oder wünschenswert ist. Aus der DE 10 2006 059 487 A1 ist des Weiteren ein Verfahren für eine Chipkarte, die keine eigenen Mittel zur Ermittlung einer aktuellen Zeitinformation aufweist, zum Empfang einer vertrauenswürdigen Zeitinformation bekannt, wobei ein an die Chipkarte übermitteltes Zertifikat eine Zeitinformation enthält, und diese Zeitinformation nach Prüfung des Zertifikats auf der Chipkarte gespeichert wird. Es sind aber keine Anwendungen bekannt, die dieses Verfahren nutzen.

Aus EP1132796 ist es bekannt, Applikationen mit Zertifikaten zu kombinieren, die Grenzwerte für die Nutzung des Datenvolumen im nicht-flüchtigen Speichers enthalten. Es ist aus US2005/222918 bekannt, Applikationen zeitlich zu beschränken und zu löschen. Es ist aus EP1768021 bekannt, Applikationen aus dem Speicher zu entfernen, wenn die Installation einer neuen Applikation erfordert, Speicherplatz freizugeben, indem die Applikation in einen externen Speicher verschoben wird, und offenbart zusätzlich als bereits bekannte Lösung, dass der Code einer vorhandenen Applikation komprimiert wird, um Speicherplatz freizugeben. EP 1130495 offenbart, Applikationen zeitlich zu beschränken, indem sie sich selber nach Ablauf ihrer Berechtigung löschen. Es wird auch offenbart, Applikationen aus dem Speicher zu entfernen, wenn die Installation einer neuen Applikation erfordert, Speicherplatz freizugeben. Hierbei geht es jedoch explizit um noch nicht abgelaufene Applikationen, und Möglichkeiten, diese wieder zu installieren.

### Zusammenfassung der Erfindung

Die sich aus diesem Bedarf ergebende Aufgabe wird unter verschiedenen Aspekten grundlegend mit den Merkmalen der unabhängigen Ansprüche gelöst. Weiterbildungen und Ausgestaltungen dieser grundlegenden Lösungen sind in den abhängigen Ansprüchen angegeben.

Grundlegend vorgeschlagenen wird danach ein Verfahren zur Installation einer zusätzlichen Applikation in einem nicht-flüchtigen Speicher einer Chipkarte durch Ausführung eines datentechnischen Protokolls, umfassend Schritte zum Bereitstellen der zusätzlichen Applikation zur Übertragung auf die Chipkarte auf einem Anbieter-Computer, zum Zuordnen eines Berechtigungszertifikats zu der zusätzlichen Applikation, wobei das Berechtigungszertifikat für die zusätzliche Applikation festgelegte Grenzwerte für die Nutzung des nicht-flüchtigen Speichers hinsichtlich Zeit und Datenvolumen enthält, wobei das Zuordnen des Berechtigungszertifikats insbesondere durch den Anbieter-Computer erfolgt, zum Prüfen der Gültigkeit des an die Chipkarte übertragenen Berechtigungszertifikats durch die Chipkarte als Voraussetzung für die Fortsetzung des datentechnischen Protokolls, zum Durchsuchen des nicht-flüchtigen Speichers der Chipkarte nach bereits gespeicherten Applikationen, deren zeitliche Grenze für die Speichernutzung überschritten ist, und Freigeben der Speicherbereiche, die von den Applikationen, deren zeitliche Grenze für die Speichernutzung überschritten ist, belegt sind, und zum Speichern der an die Chipkarte übertragenen zusätzlichen Applikation in deren nicht-flüchtigem Speicher mit den im Berechtigungszertifikat angegebenen Grenzwerten der Speichernutzung.

Der Begriff "Chipkarte" bezeichnet vorliegend jegliche Realisierung eines tragbaren Microcomputers mit einer externen Schnittstelle zum Austausch von Daten mit einem externen Gerät, einem Prozessor und einem nicht-flüchtigen Speicher, der nicht direkt über die externe Schnittstelle einer äußeren Lese- und/oder Schreiboperation zugänglich ist. Eine Chipkarte kann insbesondere sowohl eine Smartcard, wie beispielsweise eine Zugangskarte, eine Konten-, Geld- oder Kreditkarte, als auch ein Wert- oder Sicherheitsdokument, wie beispielsweise ein Reisepass, Aufenthaltstitel oder Personalausweis der neuesten Generation sein.

Der Stand der Technik bezeichnet mit Applikation Daten, Dateien, Kommandos, Einstellungen und Programme, die im nicht-flüchtigen Speicher einer Chipkarte gespeichert sind und der Chipkarte dadurch die Eignung zum Betrieb in einem bestimmten System vermitteln. Typisch betrifft der Betrieb in einem solchen System die Teilnahme an einem besonderen Protokoll zur Abwicklung einer Transaktion oder zum Auslösen eines Vorgangs. Weiterhin unterscheiden die Darstellungen zum Stand der Technik häufig zwischen mehr oder weniger privilegierten Applikationen. Die zum Zeitpunkt der Herausgabe an den Inhaber auf der Chipkarte vorhandenen Applikationen werden nachfolgend durchweg als "privilegierte Applikationen" bezeichnet. Regelmäßig können diese privilegierten Applikationen nach der Herausgabe der Chipkarte nicht verändert oder gelöscht werden. In Abgrenzung zu den vorangehend definierten "privilegierten Applikationen" wird der nicht weiter spezifizierte Begriff "Applikation" vorliegend ausschließlich für die nach der Herausgabe auf der Chipkarte angelegten nicht-privilegierten Applikationen verwendet. Das Verfahren zum Anlegen von diesen Applikationen auf der Chipkarte wird typisch als "Installation" bezeichnet und setzt eine entsprechend eingerichtete privilegierte Applikation voraus. Typisch umfasst die Installation einer Applikation das Laden von digitalen Daten in den nicht-flüchtigen Speicher der Chipkarte über eine externe Schnittstelle und das Konfigurieren der Applikation aus den geladenen Daten und das Aktivieren der Applikation durch einen entsprechenden Eintrag in dem Verzeichnis der auf der Chipkarte verfügbaren Applikationen.

Als "Anbieter" wird vorliegend eine Instanz innerhalb eines datentechnischen Ablaufs bezeichnet, die zur Installation von Applikationen geeignete Dateninhalte und eventuell Protokollbeiträge zur Verfügung stellt. Als "Anbieter-Computer" wird eine zur Bereitstellungen der für einen Anbieter typischen Datenverarbeitungsmaßnahmen eingerichtete Datenverarbeitungsanlage bezeichnet.

Als "Distributor" wird vorliegend eine Instanz innerhalb eines datentechnischen Ablaufs bezeichnet, die zur Installation von Applikationen geeignete Dateninhalte von einem Anbieter im Sinne der vorangehenden Begriffsklärung übernimmt und eventuell in Verbindung mit eigenen Protokollbeiträgen zum Abruf über eine Netzwerkverbindung zur Verfügung stellt. Als "Distributor-Computer" wird eine zur Bereitstellungen der für einen Distributor typischen Datenverarbeitungsmaßnahmen eingerichtete Datenverarbeitungsanlage bezeichnet.

Der Begriff "Zertifizierungsstelle" bezeichnet vorliegend einen Dienst mit einer in Bezug auf die Chipkarte unmittelbar herausgehobenen Vertrauensstellung. Der Nachweis setzt dementsprechend eine privilegierte Applikation voraus und beruht auf dem Grundgedanken, dass der Kartenherausgeber aus der Sicht der Chipkarte maximal vertrauenswürdig ist. Eine solche privilegierte Applikation kann beispielsweise als Implementierung eines kryptografischen Verfahrens zum Überprüfen einer digitalen Signatur ausgestaltet sein. Dabei ist nicht erforderlich, dass der Chipkarten-Herausgeber selbst die Vertrauensstellung der Zertifizierungsstelle nutzen kann. In besonderen Applikationsszenarien kann vorgesehen sein, dass der Chipkarten-Herausgeber eine privilegierte Applikation in der Chipkarte anlegt, mit der die Authentizität von Drittdaten in der Kommunikation über die externe Schnittstelle nachweisbar ist. In der beispielhaften Situation bedeutet dies, dass der Chipkarten-Herausgeber eine privilegierte Applikation auf der Chipkarte anlegt mit einem kryptografischen Algorithmus zur Prüfung einer digitalen Signatur, die der Chipkarten-Herausgeber selbst nicht erstellen kann. In diesem Fall kann nur der Besitzer des Signaturschlüssels die mit dem Algorithmus der Chipkarte gültig verifizierenden Inhalte erstellen. Als "Zertifizierungsstellen-Computer" oder kurz "ZS-Computer" wird eine zur Bereitstellungen der für eine Zertifizierungsstelle typischen Datenverarbeitungsmaßnahmen eingerichtete Datenverarbeitungsanlage bezeichnet.

Der Begriff "Berechtigungszertifikat" bezeichnet vorliegend ein digitales Zertifikat im Sinne von strukturierten oder jedenfalls strukturierbaren Daten, deren Authentizität und Integrität mit einer in der Chipkarte vorhandenen privilegierten Applikation bis zur Vertrauensstellung der Zertifizierungsstelle zurück verfolgbar ist. Insbesondere kann ein Berechtigungszertifikat im Format eines X.509 Zertifikats oder eines sog. "Card Verifiable Certificate" (CVC) vorliegen.

Ein möglicher Vorteil des vorangehend definierten grundlegenden Verfahrens kann darin gesehen werden, dass dem Nutzer der Chipkarte für die Installation einer zusätzlichen Applikation eine vertrauenswürdige Festlegung der damit einhergehenden Speicherbelegung hinsichtlich Lebensdauer und Datenvolumen zur Verfügung steht. Die Festlegung dieser Grenzen ist damit nicht dem Anbieter der Applikation überlassen. Damit kann in bestimmten Situationen das Risiko einer versehentlichen Installation einer sog. "feindlichen" Applikation reduziert werden.

In einer ersten von drei Ausgestaltungsalternativen wird in dem vorangehend definierten Verfahren das Berechtigungszertifikat ein beim Zuordnen zu der zusätzlichen Applikation nicht in der Zukunft liegendes Erstelldatum enthält und das Überschreiten der zeitlichen Grenze der Speichernutzung für die bereits installierten Applikationen unter Bezugnahme auf das Erstelldatum des Berechtigungszertifikats als Approximation für das aktuelle Datum bewertet.

Ein möglicher Vorteil dieser Ausgestaltung kann darin gesehen werden, dass das Erstelldatum des Berechtigungszertifikats einerseits eine besondere Vertrauensstellung genießt und andererseits eine sehr gute Näherung für das aktuelle Datum sein kann. Eine zusätzliche Applikation kann offenbar dann ältere am besten verdrängen, wenn das Erstelldatum des Berechtigungszertifikats möglichst aktuell ist. Oft hat es der Anbieter der Applikation oder der Nutzer der Chipkarte in der Hand, ein möglichst aktuelles Berechtigungszertifikat zu beschaffen.

In der zweiten Ausgestaltungsalternative wird das Überschreiten der zeitlichen Grenze der Speichernutzung für die bereits installierten Applikationen unter Bezugnahme auf die Anzahl der seit der jeweiligen Installation ausgeführten Kommandos, insbesondere unter Bezugnahme auf eine Zuordnung zwischen der Anzahl der ausgeführten Kommandos und der seit dem Installieren der jeweiligen Applikation verstrichenen Zeit, als Approximation für das aktuelle Datum bewertet.

Es wird also vorab ein Zusammenhang zwischen der Anzahl der aufgerufenen Kommandos, also der Anzahl der Nutzungen der Applikation und der verstrichenen Zeit ermittelt. Beispielsweise ist die durchschnittliche Häufigkeit des Aufrufs der Applikation innerhalb eines Zeitraumes bekannt oder diese wird in Abhängigkeit vom Nutzerverhalten ermittelt. Ist das Datum der Installation der Applikation bekannt, beispielsweise indem dieses bei der Installieren der Applikation hinterlegt wurde, kann durch die Anzahl der bisher erfolgten Aufrufe der Applikation unter Berücksichtigung der hinterlegten Häufigkeit der Nutzung das aktuelle Datum approximiert werden. Dieses approximierte Datum kann mit der hinterlegten zeitlichen Grenze verglichen werden.

In der zweiten Ausgestaltungsalternative wird das Überschreiten der zeitlichen Grenze der Speichernutzung für die bereits installierten Applikationen unter Bezugnahme auf ein, insbesondere vom Anbietercomputer übermitteltes und signiertes Anfangs- oder Enddatum einer Benutzersitzung als Approximation für das aktuelle Datum bewertet wird. Der Anbieter-Computer übermittelt also zu Beginn oder zum Ende einer Sitzung, also eines Verbindungsaufbaus, ein Zeitsignal, das als Approximation für das aktuelle Datum verwendet wird. Beispielsweise kann bei Beendigung der Sitzung das Datum der Sitzung gespeichert werden und dieses Datum bei einem nachfolgenden Verbindungsaufbau verwendet werden, um das aktuelle Datum näherungsweise zu berechnen, beispielsweise unter Verwendung der durchschnittlichen Nutzungshäufigkeit der Chipkarte. Wird zu Beginn der Sitzung das Datum übermittelt, kann dieses als aktuelles Datum verwendet werden. Es ist lediglich sicherzustellen, dass das Datum vertrauenswürdig ist, beispielsweise, indem das Datum signiert ist.

In einer weiteren eigenständigen Ausgestaltung der vorangehend definierten Verfahren wird das Zuordnen des Berechtigungszertifikats zu der Applikation durch einen Distributor-Computer vorgenommen und umfasst die Ausführung eines zusätzlichen datentechnischen Protokolls zwischen dem Distributor-Computer und der Zertifizierungsstellen-Computer.

In einer dazu alternativen Ausgestaltung umfasst das Zuordnen des Berechtigungszertifikats die Ausführung eines zusätzlichen datentechnischen Protokolls zwischen dem Anbieter-Computer und der Zertifizierungsstellen-Computer.

In einer dazu noch weiter alternativen Ausgestaltung umfasst das Zuordnen des Berechtigungszertifikats die Ausführung eines zusätzlichen datentechnischen Protokolls zwischen der Chipkarte und dem Zertifizierungsstellen-Computer.
In einer Ausgestaltung der vorangehend definierten Verfahrensvarianten umfasst das zusätzliche datentechnische Protokoll eine Authentifizierung der Chipkarte, des Anbieter-Computers bzw. des Distributor-Computers gegenüber dem Zertifizierungsstellen-Computer.

Ein möglicher Vorteil dieser Ausgestaltung kann darin gesehen werden, dass nur ein eingeschränkter Kreis von vertrauenswürdigen Teilnehmern von der Zertifizierungsstelle mit Berechtigungszertifikaten ausgerüstet wird. Dadurch kann in bestimmen Situationen der Missbrauch von Berechtigungszertifikaten erschwert werden.

In einer eigenständigen Ausgestaltung der vorangehenden Verfahren verweist das Berechtigungszertifikat kryptografisch geschützt auf die zusätzliche Applikation verweist und enthält insbesondere einen digital signierten Digest der zusätzlichen Applikation.

Der Begriff "Digest" bezeichnet vorliegend ein typisch auf eine einheitliche Länge gekürzten digitalen Code, der für einen bestimmten digitalen Inhalt charakteristisch ist. Vorzugsweise wird der Digest durch eine kryptografisch sichere Einwegfunktion erzeugt. Beispielsweise kann ein Digest durch die Algorithmen MD2, MD4, MD5 und der sog. "Secure Hash Algorithm (SHA)" erzeugt werden.

In einer weiteren eigenständigen Ausgestaltung der vorangehenden Verfahren ist die zusätzliche Applikation ein elektronisch codiertes Visum, eine elektronisch codierte Eintrittskarte oder ein elektronisch codierter Zugangsausweis.

In einer weiteren eigenständigen Ausgestaltung der vorangehenden Verfahren ist das Prüfen der Gültigkeit des Berechtigungszertifikats durch die Chipkarte als privilegierte Applikation im nicht-flüchtigen Speicher der Chipkarte implementiert ist.

Grundlegend vorgeschlagenen wird weiterhin eine Chipkarte mit einem nicht-flüchtigen Speicher und Datenverarbeitungseinrichtungen und einer externen Schnittstelle, wobei die Datenverarbeitungseirichtungen für die Teilnahme an einem datentechnischen Protokoll zur Installation einer zusätzlichen Applikation in dem nicht-flüchtigen Speicher eingerichtet sind und Mitteln aufweisen zum Empfangen der zusätzlichen Applikation und eines zugeordneten Berechtigungszertifikats über eine Schnittstelle zu einem Lesegerät, zum Prüfen der Gültigkeit des Berechtigungszertifikats als Voraussetzung für die Fortsetzung des Protokolls, zum Durchsuchen des nicht-flüchtigen Speichers nach gespeicherten Applikationen, deren zeitliche Grenze für die Speichernutzung überschritten ist, und Freigeben der Speicherbereiche, die von den aufgefundenen Applikationen belegt sind, und zum Speichern der zusätzlichen Applikation im nicht-flüchtigen Speicher der Chipkarte mit den im Berechtigungszertifikat angegebenen Grenzwerten der Speichernutzung.

In einer eigenständigen Ausgestaltung der vorangehenden Chipkarte sind die Mittel zum Durchsuchen des nicht-flüchtigen Speichers nach Applikationen, deren zeitliche Grenze für die Speichernutzung überschritten ist, weiterhin eingerichtet zum Auslesen eines Erstelldatums aus dem empfangenen Berechtigungszertifikat und zum Verwenden des ausgelesenen Erstelldatums als Approximation für das aktuelle Datum.

In einer weiteren eigenständigen Ausgestaltung der vorangehenden Chipkarten sind weiterhin Mittel vorgesehen sind zum Anfordern des Berechtigungszertifikats durch Ausführung eines datentechnischen Protokolls mit einem Zertifizierungsstellen-Computer.

In einer weiteren eigenständigen Ausgestaltung der vorangehenden Chipkarten leistet das datentechnische Protokoll eine Authentifizierung der Chipkarte gegenüber dem Zertifizierungsstellen-Computer leistet.

### Figuren

Exemplarische Vorrichtungen und Verfahren zur Installation von Applikationen im nicht-flüchtigen Speicher einer Chipkarte sind in den anhängenden Zeichnungen veranschaulicht. Darin zeigen:
Fig. 1 ein exemplarisches Datenverarbeitungssystem zur Ausführung der exemplarischen Verfahren gemäß den Figuren 2, 3 und 4;
Fig. 2 ein erstes exemplarisches Verfahren zur Installation einer Applikation im nicht-flüchtigen Speicher einer Chipkarte;
Fig. 3 ein zweites exemplarisches Verfahren zur Installation einer Applikation im nicht-flüchtigen Speicher einer Chipkarte; und
Fig. 4 ein drittes exemplarisches Verfahren zur Installation einer Applikation im nicht-flüchtigen Speicher einer Chipkarte.

### Beschreibung exemplarischer Realisierungen

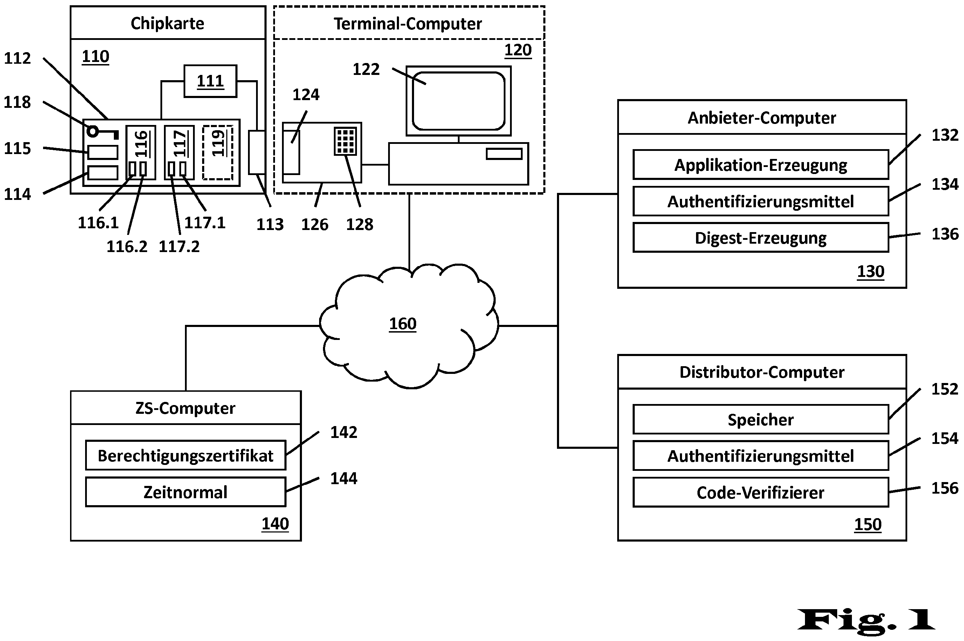

Gemäß Fig. 1 umfasst ein exemplarisches Datenverarbeitungssystem eine Chipkarte 110, einen Terminal-Computer 120, einen Anbieter-Computer 130, einen Zertifizierungsstellen-Computer 140 und einen Distributor-Computer 150.

Die Chipkarte 110 umfasst in an sich bekannter Weise einen Prozessor 111 und einen nicht-flüchtigen Speicher 112. Der nicht-flüchtige Speicher 112 kann beispielsweise als Flash- oder EEPROM-Speicher ausgeführt sein. Eine externe Schnittstelle 113 ermöglicht den Austausch von Daten zwischen dem Prozessor 111 und einem entsprechend eingerichteten Gerät außerhalb der Chipkarte 110. Die externe Schnittstelle 113 kann in an sich bekannter Weise als Kontaktblock an der Oberfläche der Chipkarte angelegt sein, um einen leitungsgebundenen Austausch von Daten in einem typisch seriellen Protokoll zu ermöglichen. Alternativ kann die externe Schnittstelle 113 als RFID-Transceiver ausgestaltet sein, um den Austausch von Daten über ein Funkübertragungsprotokoll zu erlauben. Beides ist aus dem Stand der Technik bekannt.

In einem Teil des nicht-flüchtigen Speichers 112 sind in der exemplarischen Situation ein Betriebssystem 114 und eine privilegierte Applikation 115 enthalten. Bei dem Betriebssystem kann es sich um ein typisches Chipkarten-Betriebssystem handeln wie beispielsweise Java® Card Runtime Environment (JCRE) oder STARCOS. Die privilegierte Applikation 115 ist dazu eingerichtet, die Funktionalität des Betriebssystems um eine Möglichkeit zur Installation von Applikationen zu ergänzen. Dazu verfügt die privilegierte Anwendung über Mittel zum Prüfen der Gültigkeit von Berechtigungszertifikaten, die in der exemplarischen Situation als (öffentlicher) Prüfschlüssel 118 eines digitalen Signaturalgorithmus implementiert sind.

Die vorangehend festgelegte Grenze zwischen dem Betriebssystem 114 und der privilegierten Applikation 115 mag künstlich erscheinen. Natürlich sind Realisierungen der Chipkarte 110 vorstellbar, in denen das Betriebssystem bereits die Möglichkeit zur Installation von Applikationen enthält oder in denen die Chipkarte zunächst lediglich eine rudimentäre privilegierte Applikation enthält, die als Bootlader für das Betriebssystem und weitere Applikationen genutzt werden kann.

In einem weiteren Teil des nicht-flüchtigen Speichers 112 sind weitere Applikationen 116, 117 enthalten. Diese Applikationen 116, 117 können vom Herausgeber der Chipkarte 110 bereits im Zusammenhang mit der Herstellung der Chipkarte 110 angelegt worden sein oder durch einen Nutzer später installiert worden sein.

Die privilegierte Applikation 115 und die weiteren Applikationen 116, 117 können im nicht-flüchtigen Speicher 112 innerhalb eines hierarchischen Dateisystems organisiert sein, wie dies aus dem Stand der Technik bekannt ist. Dann wäre typisch die privilegierte Applikation 115 in einem übergeordneten Verzeichnis angelegt, das ferner Verzeichnisse mit jeweils einer weiteren Applikationen 116, 117 enthält. Unabhängig von der konkret gewählten Organisation der Daten in dem nicht-flüchtigen Speicher 112 sind dort zu jeder weiteren Applikationen 116, 117 Grenzwerte 116.1, 116.2, 117.1, 117.2 abgelegt. Jeweils beschreibt ein erster Grenzwert 116.1, 117.1 den maximalen Umfang der Speichernutzung hinsichtlich der Zeitdauer. Ein zweiter Grenzwert 116.2, 117.2 beschreibt jeweils den maximalen Umfang der Speichernutzung hinsichtlich des Datenvolumens. Die einschlägige Literatur bezeichnet den ersten, zeitlichen Grenzwert gelegentlich als Vorhaltezeit oder Lebensdauer und den zweiten, Volumengrenzwert gelegentlich als Quota.

Der übrige Teil 119 des nicht-flüchtigen Speichers 112 ist in der exemplarischen Situation nicht genutzt und kann vom Nutzer zur Installation von zusätzlichen Applikationen verwendet werden.

Der Terminal-Computer 120 ist zunächst dazu eingerichtet, der Chipkarte 110 eine Möglichkeit zum Austausch von Daten mit dem Zertifizierungsstellen-Computer 140 sowie dem Anbieter-Computer und/oder dem Distributor-Computer 150 zu vermitteln.

In der exemplarischen Situation umfasst der Terminal-Computer 120 dazu eine Schnittstelle 124 zur Kommunikation mit der Chipkarte 110 über deren vorangehend beschriebene externe Schnittstelle 113. Die Schnittstelle 124 des Terminal-Computers 120 ist gemäß der vorliegend exemplarisch gewählten bevorzugten Ausgestaltung in einem separaten Lesegerät 126 eingebaut. Die vom Lesegerät 126 bereitgestellte Verbindung zum persönlichen Computer 122 des Nutzers vermittelt der Chipkarte 110 eine Möglichkeit zur Kommunikation über das Netzwerk 160. Das Lesegerät 126 kann insbesondere als vertrauenswürdige Hardware ausgestaltet sein und beispielsweise Mittel zum Schutz dieser Kommunikation enthalten. Dies ist aus dem Stand der Technik bekannt und wird deswegen nicht im Einzelnen beschrieben.

Weiterhin weist der Terminal-Computer 120 eine Erfassungseinrichtung für eine Authentifizierung des Nutzers gegenüber der Chipkarte 110 auf, die in der exemplarischen Situation als Tastatur zur Eingabe einer PIN oder einer vergleichbaren Kennung in baulicher Einheit mit dem Lesegerät 126 bereit gestellt ist.

Schließlich ist der Terminal-Computer 120 dazu eingerichtet, auf eine Eingabe eines Nutzers hin eine Anforderung für die Installation einer Applikation auf der Chipkarte 110 zu erzeugen und über das Netzwerk 160 an den Anbieter-Computer und/oder den Distributor-Computer 150 zu übertragen. Vorzugsweise umfasst der Terminal-Computer 120 dazu einen mit dem Netzwerk 160 verbundenen persönlicher Computer 122 des Nutzers. In einem typischen Anwendungsfall kann der persönliche Computer 122 insbesondere mit einem Webbrowser oder einem vergleichbaren Benutzerprogramm ausgerüstet sein, das zur Interaktion mit einem entfernten Computer über das Netzwerk 160 geeignet ist.

Der Anbieter-Computer 130 ist dazu eingerichtet, über eine Verbindung zu dem Netzwerk 160 auf eine Anforderung zur Lieferung einer zusätzlichen Applikation zur Installation auf der Chipkarte 110 zu empfangen, die mit der Anfrage bezeichnete Applikation durch entsprechend eingerichtete Mittel 132 bereitzustellen und über die Verbindung zu dem Netzwerk 160 auszuliefern. Ferner kann der Anbieter-Computer 130 dazu eingerichtet sein, eine Anforderung zur Ausstellung eines Berechtigungszertifikats zu der zusätzlichen Applikation an den Zertifizierungsstellen-Computer 140 zu übermitteln und in diesem Zusammenhang durch entsprechend eingerichtete Authentifizierungsmittel 134 eine Authentifizierung gegenüber dem Zertifizierungsstellen-Computer 140 durchzuführen. Insbesondere kann der Anbieter-Computer 130 zusätzlich Mittel zum Erzeugen eines Digests aus der Applikation umfassen.

Der Zertifizierungsstellen-Computer 140 ist dazu eingerichtet, über eine Verbindung zu dem Netzwerk 160 auf eine Anforderung für ein Berechtigungszertifikat 142 zur Installation einer Applikation zu empfangen, das angeforderte Berechtigungszertifikat 142 bereit zu stellen und über das Netzwerk 160 auszugeben. Zweckmäßig verfügt der exemplarische Zertifizierungsstellen-Computer 140 über ein Zeitnormal 144, von dem das Ausstellungsdatum und eventuell die Ausstellungszeit des Berechtigungszertifikats 142 abgeleitet wird.

Der Distributor-Computer 150 ist dazu eingerichtet, über eine Verbindung zu dem Netzwerk 160 von einem Anbieter-Computer eine Applikation zu übernehmen, zu speichern und auf eine Anfrage hin in Verbindung mit einem Berechtigungszertifikat über das Netzwerk 160 und den Terminal-Computer 120 an die Chipkarte 110 zu übertragen. Dazu ist der Distributor-Computer 150 mit einem Speicher 152 zum Speichern der Applikation ausgerüstet. Außerdem verfügt der Distributor-Computer 150 über Mittel zur Authentifizierung 154 gegenüber dem Zertifizierungsstellen-Computer 140 im Rahmen der Anforderung eines Berechtigungszertifikats. Zusätzlich kann der Distributor-Computer 150 einen Code-Verifizierer 156 umfassen, mit dem gespeicherte Applikationen in Bezug auf die Einhaltung eines bestimmten Laufzeitverhaltens überprüft werden können. Derartige Maßnahmen sind von den sog. Bytecode-Verifizierern oder Sandbox-Simulatoren aus dem Stand der Technik bekannt.

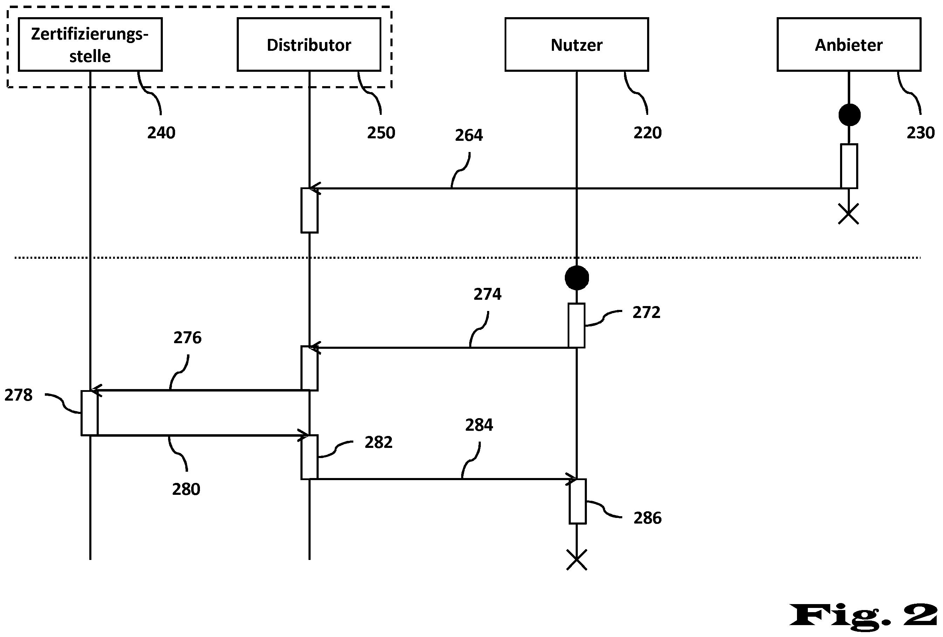

Ein erstes exemplarisches Verfahren zur Installation einer Applikation im nicht-flüchtigen Speicher 112 der Chipkarte 110 veranschaulicht Fig. 2 in Annäherung an die Darstellungskonvention der sog. Unified Modeling Language (UML).

Ein erster Abschnitt dieses Verfahrens beginnt damit, dass der Anbieter 230 in einem ersten Schritt 262 eine Applikation erstellt und diese über den Anbieter-Computer 130 sowie das Netzwerk 160 in einem weiteren Schritt 264 auf den Distributor-Computer 150 des Distributors 250 hoch lädt. Der Distributor-Computer 150 speichert die Applikation in einem abschließenden Schritt 266 im Speicher 152. Zusätzlich kann der Distributor-Computer 150 die Applikation vor der Speicherung mit dem vorangehend beschriebenen Code-Verifizierer 156 auf Integrität und Einhaltung eines bestimmten Laufzeitverhaltens untersuchen.

Ein zweiter Abschnitt dieses Verfahrens beginnt damit, dass der Nutzer 220 in einem ersten Schritt 272 über den Terminal-Computer 120 eine Anforderung zur Installation einer zusätzlichen Applikation erzeugt und diese in einem nachfolgenden Schritt 274 über das Netzwerk 160 an den Distributor-Computer 150 übermittelt. Die dort eingehende Anforderung löst in einem weiteren Schritt 276 eine Anfrage des Distributor-Computers 150 bei dem Zertifizierungsstellen-Computer 140 aus, die die Ausstellung eines Berechtigungszertifikats für die Installation der Applikation mit einem festgelegten zeitlichen und volumenmäßigen Umfang der Speichernutzung betrifft. Dabei kann vorgesehen sein, dass innerhalb der Anfrage ein Digest der Applikation übermittelt wird, der in das Berechtigungszertifikat eingebettet wird und dessen ausschließliche Zuordnung zu der Applikation ermöglicht.

Da in der exemplarischen Situation die Zertifizierungsstelle 240 mit dem Distributor 250 eine Einheit bildet, kann davon ausgegangen werden, dass der Zertifizierungsstellen-Computer 140 das Berechtigungszertifikat unmittelbar erzeugt, wie dies im Schritt 278 angedeutet ist. Dieses Berechtigungszertifikat kann vorzugsweise auf das aktuelle Datum und die aktuelle Uhrzeit des Zeitnormals 144 ausgestellt sein und wird vom Zertifizierungsstellen-Computer 140 in einem nachfolgenden Schritt 280 über das Netzwerk 160 an den Distributor-Computer 150 übermittelt.

In der exemplarischen Situation bündelt der Distributor-Computer 150 im Schritt 282 das Berechtigungszertifikat mit der Applikation und liefert den damit erzeugten Datenzusammenhang im Schritt 284 über das Netzwerk 160 und den Terminal-Computer 120 an die Chipkarte 110 aus. Im Schritt 286 wird in der Chipkarte 110 der Datenzusammenhang aufgetrennt. Das Berechtigungszertifikat wird durch die privilegierte Applikation 115 auf Gültigkeit hin geprüft. Bei positivem Ergebnis kann vorgesehen sein, dass die privilegierte Applikation 115 den nicht-flüchtigen Speicher 112 nach bereits installierten Applikationen 116, 117 durchsucht, für die eine zeitliche Grenze 116.1, 117.1 der Speichernutzung angegeben ist, die vor dem Ausstellungsdatum des Berechtigungszertifikats 142 endet. Falls derartige Applikationen gefunden werden, kann ferner vorgesehen sein, dass die privilegierte Applikation 115 diese Applikationen unmittelbar aus dem Speicher löscht und/oder den Speicher als frei kennzeichnet.

Nachfolgend installiert die privilegierte Applikation 115 die zusätzliche Applikation in einem freien oder als frei gekennzeichneten Teil 119 des nicht-fiüchtigen Speichers 112. Eventuell kann vorgesehen sein, dass die privilegierte Applikation 115 und/oder das Betriebssystem 114 die zusätzliche Applikation weiterhin für die Verwendung konfiguriert, wie dies aus dem Stand der Technik bekannt ist.

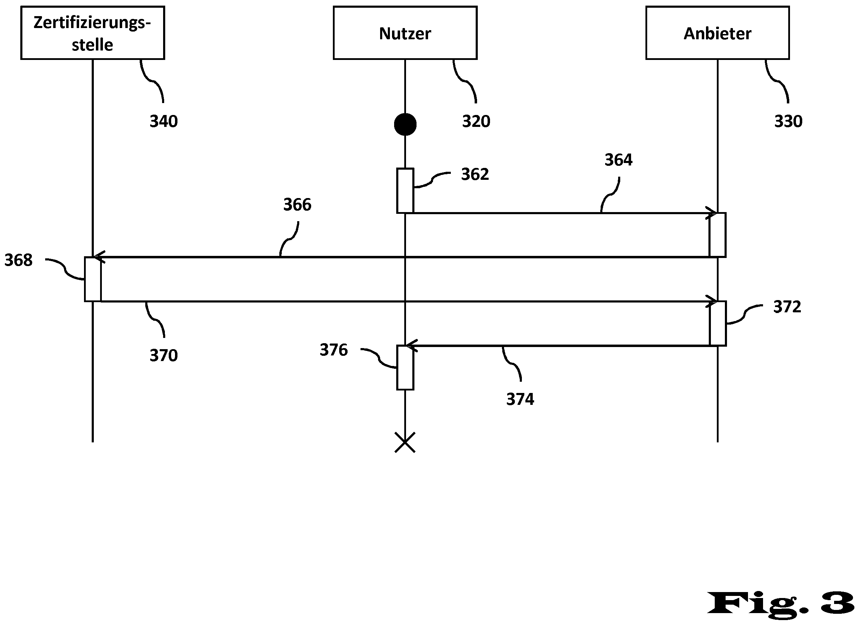

Ein zweites exemplarisches Verfahren zur Installation einer Applikation im nicht-flüchtigen Speicher 112 der Chipkarte 110 veranschaulicht Fig. 3.

Dieses Verfahren beginnt damit, dass der Nutzer 320 in einem ersten Schritt 362 über den Terminal-Computer 120 eine Anforderung zur Installation einer zusätzlichen Applikation erzeugt und diese in einem nachfolgenden Schritt 364 über das Netzwerk 160 an den Anbieter-Computer 130 übermittelt. Die dort eingehende Anforderung löst in einem weiteren Schritt 366 eine Anfrage des Anbieter-Computers 130 bei dem Zertifizierungsstellen-Computer 140 der Zertifizierungsstelle 340 aus, die die Ausstellung eines Berechtigungszertifikats für die Installation der Applikation mit einem festgelegten zeitlichen und volumenmäßigen Umfang der Speichernutzung betrifft. Dabei kann wiederum vorgesehen sein, dass innerhalb der Anfrage ein Digest der Applikation übermittelt wird, der in das Berechtigungszertifikat eingebettet wird und dessen ausschließliche Zuordnung zu der Applikation ermöglicht. Außerdem kann in diesem Schritt 366 eine Authentifizierung des Anbieter-Computers 130 gegenüber dem Zertifizierungsstellen-Computer 140 vorgesehen sein. Anschließend erzeugt der Zertifizierungsstellen-Computer 140 das Berechtigungszertifikat, wie dies im Schritt 368 angedeutet ist. Das Berechtigungszertifikat kann vorzugsweise auf das aktuelle Datum und die aktuelle Uhrzeit des Zeitnormals 144 ausgestellt sein und wird vom Zertifizierungsstellen-Computer 140 in einem nachfolgenden Schritt 370 über das Netzwerk 160 an den Anbieter-Computer 130 übermittelt. In der exemplarischen Situation bündelt der Anbieter-Computer 130 im Schritt 372 das Berechtigungszertifikat mit der Applikation und liefert den damit erzeugten Datenzusammenhang im Schritt 374 über das Netzwerk 160 und den Terminal-Computer 120 an die Chipkarte 110 aus. Im Schritt 376 wird in der Chipkarte 110 der Datenzusammenhang aufgetrennt. Das Berechtigungszertifikat wird durch die privilegierte Applikation 115 auf Gültigkeit hin geprüft. Bei positivem Ergebnis kann die Applikation wie vorangehend beschrieben im nicht-flüchtigen Speicher 112 der Chipkarte 110 installiert werden.

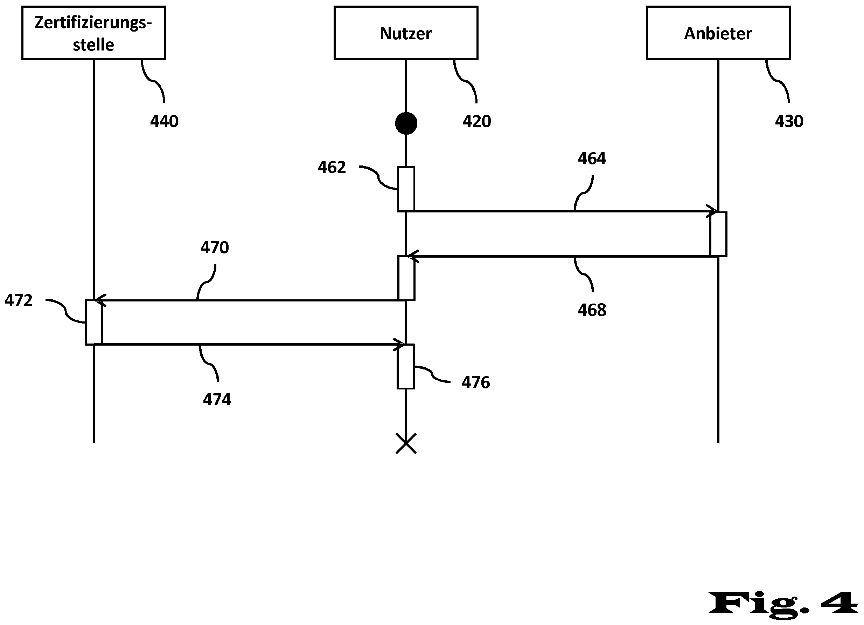

Ein drittes exemplarisches Verfahren zur Installation einer Applikation im nicht-flüchtigen Speicher 112 der Chipkarte 110 veranschaulicht Fig. 4.

Dieses Verfahren beginnt wiederum damit, dass der Nutzer 420 in einem ersten Schritt 462 über den Terminal-Computer 120 eine Anforderung zur Installation einer zusätzlichen Applikation erzeugt und diese in einem nachfolgenden Schritt 464 über das Netzwerk 160 an den Anbieter-Computer 130 übermittelt. Der Anbieter-Computer 130 erzeugt auf die Anfrage hin die damit beschriebene Applikation durch die vorangehend erwähnten Mittel 132 und liefert diese in einem nachfolgenden Schritt 468 über das Netzwerk 160 und den Terminal-Computer 120 an die Chipkarte 110 aus. Allerdings kann die Applikation dort noch nicht installiert werden, weil das dazu erforderliche Berechtigungszertifikat fehlt.

Deshalb führt der Nutzer 420 in einem weiteren Schritt 470 eine Anfrage bei der Zertifizierungsstelle 340 aus, die die Ausstellung eines Berechtigungszertifikats für die Installation der Applikation mit einem festgelegten zeitlichen und volumenmäßigen Umfang der Speichernutzung durch den Zertifizierungsstellen-Computer 140 betrifft. Dabei kann wiederum vorgesehen sein, dass innerhalb der Anfrage ein Digest der Applikation übermittelt wird. Dieser Digest kann dem Zertifizierungsstellen-Computer zur Identifikation der Applikation dienen und in das Berechtigungszertifikat eingebettet werden.

Im nächsten Schritt 472 erzeugt der Zertifizierungsstellen-Computer 140 das Berechtigungszertifikat., das wiederum vorzugsweise auf das aktuelle Datum und die aktuelle Uhrzeit des Zeitnormals 144 ausgestellt sein kann und vom Zertifizierungsstellen-Computer 140 in einem nachfolgenden Schritt 474 über das Netzwerk 160 und den Terminal-Computer 120 an die Chipkarte 110 übermittelt wird. Dort wird in einem Schritt 476 das Berechtigungszertifikat durch die privilegierte Applikation 115 auf Gültigkeit hin geprüft. Bei positivem Ergebnis kann die Applikation wie vorangehend beschrieben im nicht-flüchtigen Speicher 112 der Chipkarte 110 installiert werden.

### Bezugszeichenliste

- 110: Chipkarte
- 111: Prozessor
- 112: Nicht-flüchtiger Speicher
- 113: Externe Schnittstelle
- 114: Betriebssystem
- 115: Privilegierte Applikation
- 116, 117: Applikationen
- 116.1, 116.2, 117.1, 117.2: Grenzwerte
- 118: Prüfschlüssel
- 119: Freier Speicher
- 120: Terminal-Computer
- 122: Persönlicher Computer
- 124: Schnittstelle
- 126: Lesegerät
- 128: Tastatur
- 130: Anbieter-Computer
- 132: Mittel zur Applikation-Erzeugung
- 134: Authentifizierungsmittel
- 136: Code-Verifizierer
- 140: Zertifizierungsstellen-Computer
- 142: Mittel für Berechtigungszertifikat
- 144: Zeitnormal
- 150: Distributor-Computer
- 152: Speicher für Applikationen
- 154: Authentifizierungsmittel
- 156: Code-Verifizierer
- 220: Nutzer
- 230: Anbieter
- 240: Zertifizierungsstelle
- 250: Distributor
- 272-286: Schritte
- 320: Nutzer
- 330: Anbieter
- 340: Zertifizierungsstelle
- 362-376: Schritte
- 420: Nutzer
- 430: Anbieter
- 440: Zertifizierungsstelle
- 462-476: Schritte

## Patentansprüche

1. Verfahren zur Installation einer zusätzlichen Applikation in einem nicht-flüchtigen Speicher (112) einer Chipkarte (110) durch Ausführung eines datentechnischen Protokolls, umfassend:
- Bereitstellen der zusätzlichen Applikation zur Übertragung auf die Chipkarte (110) auf einem Anbieter-Computer (130);
- Zuordnen eines Berechtigungszertifikat (142) zu der zusätzlichen Applikation, wobei das Berechtigungszertifikat (142) für die zusätzliche Applikation festgelegte Grenzwerte für die Nutzung des nicht-flüchtigen Speichers (112) hinsichtlich Zeit und Datenvolumen enthält, insbesondere durch den Anbieter-Computer (130);
- Prüfen der Gültigkeit des an die Chipkarte (110) übertragenen Berechtigungszertifikats (142) durch die Chipkarte (110) als Voraussetzung für die Fortsetzung des datentechnischen Protokolls;
- Durchsuchen des nicht-flüchtigen Speichers (112) der Chipkarte (110) nach bereits gespeicherten Applikationen (116, 117), deren zeitliche Grenze (116.1, 117.1) für die Speichernutzung überschritten ist, und Freigeben der Speicherbereiche, die von den Applikationen (116, 117), deren zeitliche Grenze (116.1, 117.1) überschritten ist, belegt sind;
- Speichern der an die Chipkarte (110) übertragenen zusätzlichen Applikation in deren nicht-flüchtigem Speicher (112) mit den im Berechtigungszertifikat (142) angegebenen Grenzwerten der Speichernutzung.

2. Verfahren nach Anspruch 1, worin das Berechtigungszertifikat (142) ein beim Zuordnen zu der zusätzlichen Applikation nicht in der Zukunft liegendes Erstelldatum enthält und worin das Überschreiten der zeitlichen Grenze (116.1, 117.1) der Speichernutzung für die bereits installierten Applikationen (116, 117) unter Bezugnahme auf das Erstelldatum des Berechtigungszertifikats (142) als Approximation für das aktuelle Datum bewertet wird.

3. Verfahren nach Anspruch 1, worin das Überschreiten der zeitlichen Grenze (116.1, 117.1) der Speichernutzung für die bereits installierten Applikationen (116, 117) unter Bezugnahme auf die Anzahl der seit der jeweiligen Installation ausgeführten Kommandos, insbesondere unter Bezugnahme auf eine Zuordnung zwischen der Anzahl der ausgeführten Kommandos und der seit dem Installieren der jeweiligen Applikation verstrichenen Zeit, als Approximation für das aktuelle Datum bewertet wird.

4. Verfahren nach Anspruch 1, worin das Überschreiten der zeitlichen Grenze der Speichernutzung für die bereits installierten Applikationen (116, 117) unter Bezugnahme auf ein, insbesondere vom Anbieter-Computer übermitteltes und signiertes Anfangs- oder Enddatum einer Benutzersitzung als Approximation für das aktuelle Datum bewertet wird.

5. Verfahren nach einem der Ansprüche 1 bis 4, worin das Zuordnen des Berechtigungszertifikats (142) zu der Applikation durch einen Distributor-Computer (150) vorgenommen wird und die Ausführung eines zusätzlichen datentechnischen Protokolls zwischen dem Distributor-Computer (150) und der Zertifizierungsstellen-Computer (140) umfasst.

6. Verfahren nach einem der Ansprüche 1 bis 4, worin das Zuordnen des Berechtigungszertifikats (142) die Ausführung eines zusätzlichen datentechnischen Protokolls zwischen dem Anbieter-Computer (130) und der Zertifizierungsstellen-Computer (140) umfasst.

7. Verfahren nach einem der Ansprüche 1 bis 4, worin das Zuordnen des Berechtigungszertifikats (142) die Ausführung eines zusätzlichen datentechnischen Protokolls zwischen der Chipkarte (110) und dem Zertifizierungsstellen-Computer (140) umfasst.

8. Verfahren nach einem der Ansprüche 4 bis 6, worin das zusätzliche datentechnische Protokoll eine Authentifizierung der Chipkarte (110), des Anbieter-Computers (130) bzw. des Distributor-Computers (150) gegenüber dem Zertifizierungsstellen-Computer (140) umfasst.

9. Verfahren nach einem der vorangehenden Ansprüche, worin das Berechtigungszertifikat (142) kryptografisch geschützt auf die zusätzliche Applikation verweist und insbesondere einen digital signierten Digest der zusätzlichen Applikation enthält.

10. Verfahren nach einem der vorangehenden Ansprüche, worin die zusätzliche Applikation ein elektronisch codiertes Visum, eine elektronisch codierte Eintrittskarte oder ein elektronisch codierter Zugangsausweis ist.

11. Verfahren nach einem der vorangehenden Ansprüche, worin das Prüfen der Gültigkeit des Berechtigungszertifikats (142) durch die Chipkarte (110) als privilegierte Applikation (114) im nicht-flüchtigen Speicher (112) der Chipkarte (110) implementiert ist.

12. Chipkarte (110), aufweisend einen nicht-flüchtigen Speicher (112) und Datenverarbeitungseinrichtungen (111) zur Teilnahme an einem datentechnischen Protokoll zur Installation einer zusätzlichen Applikation in dem nicht-flüchtigen Speicher (112) mit Mitteln zum:
- Empfangen der zusätzlichen Applikation und eines zugeordneten Berechtigungszertifikats (142) über eine Schnittstelle (113) zu einem Lesegerät (126);
- Prüfen der Gültigkeit des Berechtigungszertifikats (142) als Voraussetzung für die Fortsetzung des Protokolls;
- Durchsuchen des nicht-flüchtigen Speichers (112) nach gespeicherten Applikationen (116, 117), deren zeitliche Grenze (116.1, 117.1) für die Speichernutzung überschritten ist, und Freigeben der Speicherbereiche, die von den Applikationen, deren zeitliche Grenze (116.1, 117.1) für die Speichernutzung überschritten ist, belegt sind;
- Speichern der zusätzlichen Applikation im nicht-flüchtigen Speicher (112) der Chipkarte (110) mit den im Berechtigungszertifikat (142) angegebenen Grenzwerten der Speichernutzung.

13. Chipkarte (110) nach Anspruch 12, wobei die Mittel (111) zum Durchsuchen des nicht-flüchtigen Speichers (112) nach Applikationen (116, 117), deren zeitliche Grenze für die Speichernutzung überschritten ist, weiterhin eingerichtet sind zum Auslesen eines Erstelldatums aus dem empfangenen Berechtigungszertifikat (142) und zum Verwenden des ausgelesenen Erstelldatums als Approximation für das aktuelle Datum.

14. Chipkarte (110) nach einem der Ansprüche 12 oder 13, wobei weiterhin Mittel vorgesehen sind zum Anfordern des Berechtigungszertifikats (142) durch Ausführung eines datentechnischen Protokolls mit einem Zertifizierungsstellen-Computer (140).

15. Chipkarte (110) nach Anspruch 14, wobei das datentechnische Protokoll eine Authentifizierung der Chipkarte (110) gegenüber dem Zertifizierungsstellen-Computer (140) leistet.

## Claims

1. A method for installing an additional application in a non-volatile memory (112) of a chip card (110) by executing a data protocol, comprising:
- providing the additional application for transmission to the chip card (110) on a provider computer (130);
- assigning an authorization certificate (142) to the additional application, wherein the authorization certificate (142) includes limiting values, established for the additional application, for the use of the non-volatile memory (112) with respect to time and data volume, in particular by the provider computer (130);
- checking, by the chip card (110), the validity of the authorization certificate (142) transmitted to the chip card (110) as a prerequisite for the continuation of the data protocol;
- searching the non-volatile memory (112) of the chip card (110) for previously stored applications (116, 117) having exceeded the time limit (116.1, 117.1) thereof for use of the memory, and releasing the memory areas occupied by the applications (116, 117) having exceeded the time limit (116.1, 117.1) thereof; and
- storing the additional application transmitted to the chip card (110) in the non-volatile memory (112), thereof together with the limiting values for use of the memory indicated in the authorization certificate (142).

2. The method according to claim 1, wherein the authorization certificate (142) includes a creation date that is not in the future during the assignment to the additional application, and exceeding the time limit (116.1, 117.1) for use of the memory for the previously installed applications (116, 117), with reference to the creation date of the authorization certificate (142), is regarded as an approximation for the current date.

3. The method according to claim 1, wherein exceeding the time limit (116.1, 117.1) for use of the memory for the previously installed applications (116, 117), with reference to the number of commands executed since the respective installation, in particular with reference to an assignment between the number of executed commands and the time that has elapsed since the installation of the respective application, is regarded as an approximation for the current date.

4. The method according to claim 1, wherein exceeding the time limit for use of the memory for the previously installed applications (116, 117), with reference to a starting or ending date of a user session transmitted and signed in particular by the provider computer, is regarded as an approximation for the current date.

5. The method according to any one of claims 1 to 4, wherein the assignment of the authorization certificate (142) to the application is carried out by a distributor computer (150) and includes the execution of an additional data protocol between the distributor computer (150) and the certification entity computer (140).

6. The method according to any one of claims 1 to 4, wherein the assignment of the authorization certificate (142) includes the execution of an additional data protocol between the provider computer (130) and the certification entity computer (140).

7. The method according to any one of claims 1 to 4, wherein the assignment of the authorization certificate (142) includes the execution of an additional data protocol between the chip card (110) and the certification entity computer (140).

8. The method according to any one of claims 4 to 6, wherein the additional data protocol comprises an authentication of the chip card (110), of the provider computer (130) and/or of the distributor computer (150) with respect to the certification entity computer (140).

9. The method according to any one of the preceding claims, wherein the authorization certificate (142) refers to the additional application in a cryptographically protected manner and, in particular, includes a digitally signed digest of the additional application.

10. The method according to any one of the preceding claims, wherein the additional application is an electronically encoded visa, an electronically encoded admission ticket or an electronically encoded access identification card.

11. The method according to any one of the preceding claims, wherein the checking of the validity of the authorization certificate (142) by the chip card (110) is implemented as a privileged application (114) in the non-volatile memory (112) of the chip card (110).

12. A chip card (110), comprising a non-volatile memory (112) and data processing units (111) for the participation in a data protocol for the installation of an additional application in the non-volatile memory (112), comprising means for:
- receiving the additional application and an assigned authorization certificate (142) via an interface (113) to a reader (126);
- checking the validity of the authorization certificate (142) as a prerequisite for the continuation of the protocol;
- searching the non-volatile memory (112) for stored applications (116, 117) having exceeded the time limit (116.1, 117.1) thereof for use of the memory, and releasing the memory areas occupied by the applications having exceeded the time limit (116.1, 117.1) thereof for use of the memory; and
- storing the additional application in the non-volatile memory (112) of the chip card (110) together with the limiting values for use of the memory indicated in the authorization certificate (142).

13. The chip card (110) according to claim 12, wherein the means (111) for searching the non-volatile memory (112) for stored applications (116, 117) having exceeded the time limit thereof of use of the memory are furthermore configured to read out a creation date from the receiving authorization certificate (142) and to use the read-out creation date as an approximation for the current date.

14. The chip card (110) according to either claim 12 or 13, wherein furthermore means are provided for requesting the authorization certificate (142) by the execution of an additional data protocol using a certification entity computer (140).

15. The chip card (110) according to claim 14, wherein the data protocol carries out an authentication of the chip card (110) with respect to the certification entity computer (140).

## Revendications

1. Procédé d'installation d'une application supplémentaire dans une mémoire (112) non volatile d'une carte à puce (110) par l'exécution d'un protocole technique de données, comprenant :
- la préparation de l'application supplémentaire pour la transmission sur la carte à puce (110) sur un ordinateur de prestataire (130) ;
- l'attribution d'un certificat d'autorisation (142) à l'application supplémentaire, où le certificat d'autorisation (142) pour l'application supplémentaire contient des valeurs limites fixées pour l'utilisation de la mémoire (112) non volatile en ce qui concerne le temps et le volume de données, notamment, par l'ordinateur de prestataire (130) ;
- la vérification de la validité du certificat d'autorisation (142) transmis à la carte à puce (110) par la carte à puce (110) en tant que condition préalable pour la poursuite du protocole technique de données ;
- la recherche, dans la mémoire (112) non volatile de la carte à puce (110), d'applications (116, 117) déjà stockées dont la limite temporelle (116.1, 117.1) pour l'utilisation de la mémoire est dépassée, et la libération des zones de mémoire qui sont occupées par les applications (116, 117) dont la limite temporelle (116.1, 117.1) est dépassée ;
- le stockage des applications supplémentaires transmises à la carte à puce (110) dans leur mémoire (112) non volatile avec les valeurs limites de l'utilisation de la mémoire indiquées dans le certificat d'autorisation (142).

2. Procédé selon la revendication 1, dans lequel le certificat d'autorisation (142) contient une date d'établissement ne se situant pas dans l'avenir lors de l'attribution à l'application supplémentaire et dans lequel le dépassement de la limite temporelle (116.1, 117.1) de l'utilisation de la mémoire est établi pour la date actuelle pour les applications (116, 117) déjà installées en tenant compte de la date d'établissement du certificat d'autorisation (142) servant d'approximation.

3. Procédé selon la revendication 1, dans lequel le dépassement de la limite temporelle (116.1, 117.1) évalue l'utilisation de la mémoire sous forme d'approximation pour la date actuelle pour les applications (116.1, 117.1) déjà installées en prenant en compte le nombre des commandes exécutées installées respectives, notamment, en tenant compte d'une attribution entre le nombre des commandes exécutées et le temps écoulé depuis l'installation de l'application respective.

4. Procédé selon la revendication 1, dans lequel le dépassement de la limite temporelle de l'utilisation de la mémoire pour les applications (116, 117) déjà installées est évalué en tant qu'approximation pour la date actuelle en tenant compte, en particulier, d'une date de début ou de fin d'une session d'utilisateur transmise et signée par l'ordinateur de prestataire.

5. Procédé selon l'une des revendications 1 à 4, dans lequel l'attribution du certificat d'autorisation (142) à l'application est effectuée par un ordinateur de distributeur (150) et comprend l'exécution d'un protocole technique de données supplémentaire entre l'ordinateur de distributeur (150) et l'ordinateur de lieux de certification (140).

6. Procédé selon l'une des revendications 1 à 4, lequel l'attribution du certificat d'autorisation (142) comprend l'exécution d'un protocole technique de données supplémentaire entre l'ordinateur de prestataire (130) et l'ordinateur de lieux de certification (140).

7. Procédé selon l'une des revendications 1 à 4, dans lequel l'attribution du certificat d'autorisation (142) comprend l'exécution d'un protocole technique de données supplémentaire entre la carte à puce (110) et l'ordinateur de lieux de certification (140).

8. Procédé selon l'une des revendications 4 à 6, dans lequel le protocole technique de données supplémentaire comprend une authentification de la carte à puce (110, de l'ordinateur de prestataire (130), respectivement, de l'ordinateur de distributeur (150), vis-à-vis de l'ordinateur de lieux de certification (140).

9. Procédé selon l'une des revendications précédentes, dans lequel le certificat d'autorisation (142) se réfère de manière protégée par cryptographie à l'application supplémentaire et contient notamment un résumé signé numériquement de l'application supplémentaire.

10. Procédé selon l'une des revendications précédentes, dans lequel l'application supplémentaire est un visa codé électroniquement, une carte d'entrée codée électroniquement ou une carte d'accès codée électroniquement.

11. Procédé selon l'une des revendications précédentes, dans lequel la vérification de la validité du certificat d'autorisation (142) est mise en œuvre par la carte à puce (110) sous forme d'application privilégiée (114) dans la mémoire (112) non volatile de la carte à puce (110).

12. Carte à puce (110) présentant une mémoire (112) non volatile et des dispositifs de traitement de données (111) pour la participation à un protocole technique de données en vue de l'installation d'une application supplémentaire dans la mémoire (112) non volatile, dotée de moyens pour :
- la réception de l'application supplémentaire et du certificat d'autorisation (142) associé pour un lecteur (126) par le biais d'une interface (113) ;
- la vérification de la validité du certificat d'autorisation (142) en tant que condition nécessaire pour la poursuite du protocole ;
- la recherche, dans la mémoire (112) non volatile, d'applications (116, 117) stockées dont la limite temporelle (116.1, 117.1) pour l'utilisation de la mémoire est dépassée, et la libération des zones de mémoire qui sont occupées par les applications dont la limite temporelle (116.1, 117.1) pour l'utilisation de la mémoire est dépassée ;
- le stockage des applications supplémentaires dans la mémoire (112) non volatile de la carte à puce (110) avec les valeurs limites de l'utilisation de la mémoire indiquées dans le certificat d'autorisation (142).

13. Carte à puce (110) selon la revendication 12, dans laquelle les moyens pour la recherche, dans la mémoire (112) non volatile, d'applications (116, 117) dont la limite temporelle pour l'utilisation de la mémoire est dépassée, sont en outre conçus pour la lecture d'une date d'établissement à partir du certificat d'autorisation (142) réceptionné et pour l'utilisation de la date d'établissement lue en tant qu'approximation pour la date actuelle.

14. Carte à puce '(110) selon l'une des revendications 12 ou 13, dans laquelle, en outre des moyens sont prévus pour la demande du certificat d'autorisation (142) par l'exécution d'un protocole technique de données avec un ordinateur de lieux de certification '140).

15. Carte à puce (110) selon la revendication 14, dans laquelle le protocole technique de données effectue une authentification de la carte à puce (110) vis-à-vis de l'ordinateur de lieux de certification (140).
